# FASCICULE DE BREVET EUROPEEN

(11) **EP 2 741 359 B1**
(45) Date de publication et mention de la délivrance du brevet: **18.11.2015**
(21) Numéro de dépôt: 13196328.2
(22) Date de dépôt: 09.12.2013
(51) Int. Cl.: H01M 8/10, H01M 4/86, H01M 4/88, H01M 8/02

(54) **Cellule pour pile à combustible à membrane échangeuse de protons, avec des couches de diffusion gazeuse de rigidité différente à l'anode et à la cathode**
Zelle für Brennstoffzelle mit Protonen-Austauschmembran und Gasdiffusionsschichten unterschiedlicher Flexibilität an der Anode und an der Kathode
Cell for fuel cell with proton-exchange membrane, with gas diffusion layers having different rigidity in the anode and the cathode

(30) Priorité: 10.12.2012 FR 1261834
(43) Date de publication de la demande: 11.06.2014
(73) Titulaire: COMMISSARIAT A L'ENERGIE ATOMIQUE ET AUX ENERGIES ALTERNATIVES, 75015 Paris (FR)
(72) Inventeur: Rouillon, Ludovic, 38250 Villard de Lans (FR); Pauchet, Joël, 38410 Saint Martin d'Uriage (FR)
(74) Mandataire: Desvignes, Agnès

(56) Documents cités:
- WO-A1-2008/050885
- US-A1- 2007 015 042
- US-A1- 2012 021 329
- US-B1- 6 503 856

## Description

### DOMAINE

La présente invention concerne les piles à combustible pour la génération d'électricité, et plus particulièrement les piles dites à membrane échangeuse de protons, connues sous leur acronyme anglo-saxon PEMFC. L'invention concerne plus particulièrement la couche de diffusion gazeuse disposée de chaque côté de l'assemblage membrane-électrodes, dit AME, qui constitue ce que l'on appelle communément le coeur de pile de ces cellules.

### CONTEXTE

Une pile PEMFC est un générateur de courant dont le principe de fonctionnement repose sur la conversion de l'énergie chimique en énergie électrique par réaction catalytique de l'hydrogène et de l'oxygène. Une pile comprend au moins une cellule, mais plus généralement un empilement série de plusieurs cellules, pour répondre aux besoins des applications.

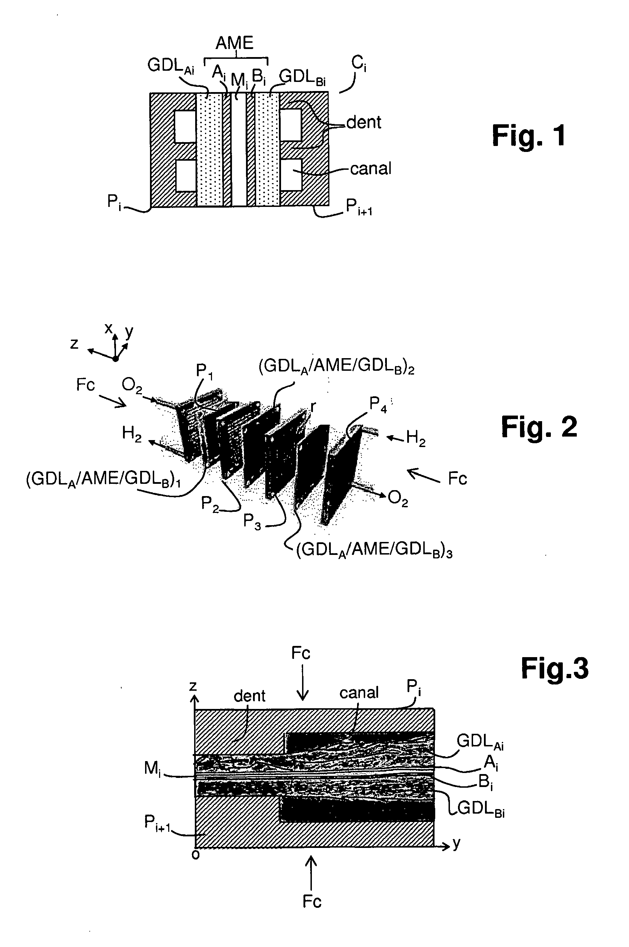

Chaque cellule Cᵢ comprend un assemblage membrane-électrodes (AME) appelé communément coeur de pile qui constitue l'élément de base des PEMFC. Comme schématiquement illustré sur la figure 1, un assemblage membrane-électrodes AME est composé d'une membrane électrolytique Mᵢ et de deux électrodes Aᵢ et Bᵢ, une de chaque côté de la membrane, formant respectivement une anode et une cathode. La membrane sépare ainsi les compartiments catalytiques, anode et cathode, de la cellule. La cellule comprend aussi une couche de diffusion gazeuse GDL_{Ai} et GDL_{Bi} (tissu de carbone, feutre...), une côté anode et une côté cathode, pour assurer la conduction électrique, l'arrivée homogène des gaz réactifs et l'évacuation de l'eau produite. Chaque couche de diffusion gazeuse est empilée entre une électrode de l'assemblage AME et une plaque collecteur de courant respective. Les deux plaques Pᵢ et Pᵢ₊₁ qui encadrent l'assemblage ont en plus de la fonction de collecteur de courant, une fonction de transport fluidique, pour la distribution des réactifs, carburant côté anode et comburant côté cathode et l'écoulement de l'eau ou la vapeur d'eau produite. Ces plaques ont ainsi une paroi structurée (r) pour former des canaux de transport. On parle notamment de plaque à structure ou géométrie dents/canaux.

Une pile est illustrée de manière schématique sur la figure 2 qui comprend un empilement de n=3 cellules. Chaque cellule comprend un empilement : couche de diffusion gazeuse /AME/couche de diffusion gazeuse (GDL_{A}/AME/GDL_{B}), entre deux plaques collecteur de courant. Les plaques les plus externes P₁ et P₄ servent de plaques de serrage pour le maintien mécanique de l'ensemble. Les plaques internes de l'empilement, les plaques P₂ et P₃ dans l'exemple, servent chacune à deux cellules de l'empilement, avec une paroi appliquée côté anode d'une cellule, et l'autre paroi appliquée côté cathode d'une autre cellule (plaques bipolaires).

Les plaques collecteur de courant les plus courantes sont des plaques en graphite et les canaux d'écoulement sont obtenus par usinage, mais d'autres types de plaques sont développés, pour réduire notamment leurs coûts. On trouve ainsi par exemple des plaques en matériaux composites organiques obtenus par thermocompression, ou à base de tôle métalliques embouties. Elles présentent comme précédemment indiqué une ou ses deux faces pourvue d'une structure géométrique en relief dessinant les canaux de transports fluidiques. Cette face structurée, dite à dents et canaux, vient en appui sur une couche de diffusion gazeuse disposée sur une face d'un AME. Les canaux de transport sont ainsi délimités par la plaque et la couche de diffusion gazeuse. Les dents des plaques qui sont les parties en appui sur les couches de diffusion gazeuse, sont les points de collecte de courant des plaques.

La membrane électrolytique est une membrane polymère mince, permettant le passage des protons (H⁺) mais imperméable aux réactifs.

Les électrodes sont formées par au moins une couche catalytique. Les couches catalytiques sont les couches actives du coeur de pile. Elles sont poreuses, généralement constituées de nano-particules de platine qui forment les sites catalytiques, supportées par des agrégats carbone.

Les couches de diffusion gazeuse sont constituées d'un matériau poreux tel qu'un papier ou tissu de fibres de carbone. Elles assurent comme indiqué précédemment, la conduction électrique, l'arrivée des réactifs amenés par les canaux des plaques et leur répartition la plus uniforme possible dans la couche active et l'évacuation de l'eau produite par la réaction chimique. Ces couches servent aussi à compenser les défauts d'alignement, de planéité et d'épaisseurs des différents composants des cellules empilées et maintenues par compression mécanique via les plaques de serrage.

La force de serrage est déterminée pour ajuster la compression Fc exercée par chaque paire de plaques sur chacun des assemblages AME de l'empilement. Une certaine compression est en effet nécessaire pour l'assemblage mécanique proprement dit mais aussi pour bénéficier d'une conductivité optimale dans chaque cellule en favorisant les chemins de conduction électrique et thermique entre les composants des assemblages AME et les points de collectes de courant, c'est-à-dire typiquement les dents des plaques, pour compenser les effets des coefficients de dilatation thermique des couches de l'assemblage AME observés notamment dans les phases de démarrage et de coupure, ou en cas de variation de charge de la pile et pour compenser les défauts d'alignement/planéité/épaisseurs de l'empilement des cellules.

### PROBLEME POSE

De nombreux efforts de recherche et développement sont conduits pour améliorer les performances des piles à combustibles et également pour réduire leurs coûts, dans le but de permettre leur déploiement à l'échelle industrielle, notamment pour les applications de transport.

Au niveau d'une cellule, on cherche à optimiser chacun des composants, et notamment ceux du coeur de pile ou AME : la membrane, les couches actives et les couches de diffusion, qui font ainsi l'objet d'études particulières (matériaux, structure).

Un axe de ces études porte sur les hétérogénéités de fonctionnement bien connues de ces piles, liées à la manière dont les contraintes mécaniques s'exercent sur les composants des cellules de l'empilement d'une pile.

Si on se place au niveau d'une cellule Ci comme illustré sur la figure 3, une contrainte mécanique s'exerce sur les couches de diffusion Aᵢ et Bᵢ de l'assemblage AME qui résulte de la force de compression Fc appliquée par les plaques de serrage (figure 2). Cette contrainte mécanique s'exerce en réalité de manière plus ou moins hétérogène, selon le matériau de la couche de diffusion gazeuse. On a vu en effet que la paroi de plaque qui vient en appui sur une couche de diffusion gazeuse présente une surface structurée en relief de manière à former des canaux d'écoulement entre la paroi de plaque et cette couche. Par l'action des plaques de serrage, la plaque exerce une contrainte en compression sur la couche de diffusion gazeuse. Du fait de la géométrie de la paroi et du fait de la différence en terme de rigidité entre les matériaux constitutifs de la plaque et de la couche de diffusion gazeuse, cette contrainte mécanique ne s'étale pas de manière homogène sur la couche de diffusion. Plus précisément, la contrainte est localisée sous les parties de la plaque en appui sur la couche, c'est-à-dire typiquement sous les dents. Sous les canaux, la couche de diffusion gazeuse ne voit pas de contrainte et peut donc se distendre comme illustré sur la figure 3, notamment sous l'effet de l'eau produite dans les réactions.

Cette hétérogénéité de compression est d'autant plus marquée que la couche de diffusion gazeuse est plus souple. Une cartographie des contraintes exercées sur une couche de diffusion gazeuse montrerait ainsi clairement une empreinte des dents dans la couche, qui serait d'autant plus marquée pour des couches de diffusion de type feutre, que pour celles de type papier.

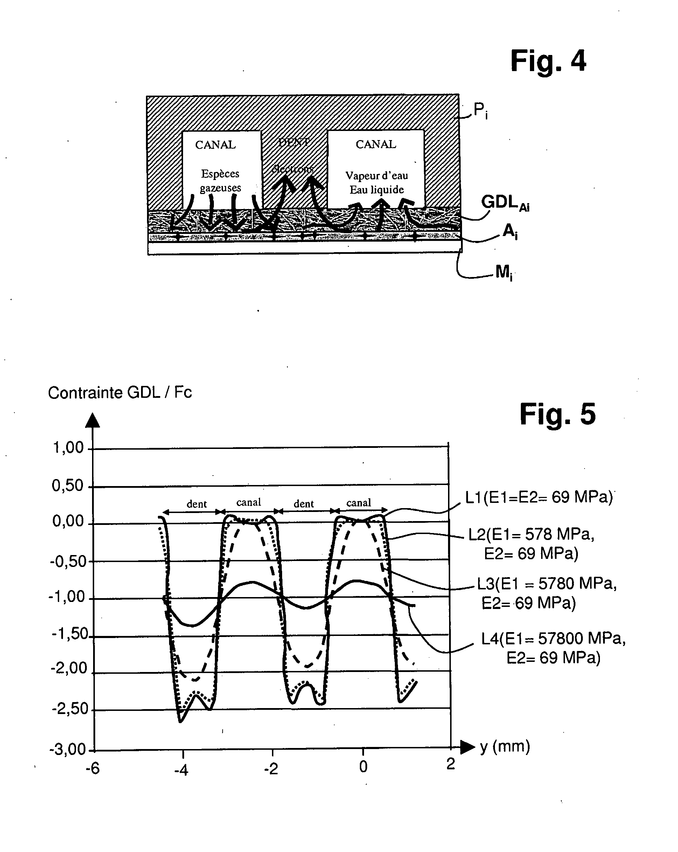

Or comme illustré sur la figure 4, les couches de diffusion gazeuse des cellules, telle que la couche GDLAᵢ sur la figure, assurent la conduction électrique vers les collecteurs (dents) des plaques (Pᵢ), l'arrivée des réactifs amenés par les canaux dessinés par les plaques et leur répartition dans la couche active, que l'on cherche la plus uniforme possible pour atteindre les sites catalytiques répartis dans la couche catalytique Aᵢ et l'évacuation de l'eau ou la vapeur d'eau produite par la réaction chimique.

Ces couches servent encore à compenser les défauts d'alignement, de planéité et d'épaisseurs des différents composants des cellules empilées et maintenues par compression mécanique via les plaques de serrage.

La contrainte de compression mécanique qui s'exerce de manière hétérogène sur la surface de la couche de diffusion gazeuse se traduit donc sur chaque cellule par un fonctionnement inhomogène avec deux effets principaux :
- la porosité de la couche de diffusion gazeuse est plus élevée sous les canaux que sous les dents, où la compression de la couche de diffusion est la plus forte. Les gaz vont donc diffuser préférentiellement vers les sites catalytiques situés sous les canaux, parce qu'ils sont plus accessibles.
- la conductivité électrique est plus élevée sous les dents, la compression favorisant les chemins de conduction électrique dans la couche, et donc c'est à travers les dents que les électrons sont majoritairement collectés.

Cette hétérogénéité de fonctionnement pose donc des limites au transfert électrique d'une part et au transfert de gaz d'autre part.

Si on se place au niveau de la pile comprenant un empilement de cellules pris entre deux plaques de serrage, d'autres inhomogénéités mécaniques sont à prendre en compte qui participent des inhomogénéités de fonctionnement dans les cellules. Ce sont les inhomogénéités d'alignement, d'épaisseur et de planéité des différents composants. Ces inhomogénéités ont une tendance à s'accroître du fait d'un relâchement dans les exigences de tolérance, lié à une recherche de baisse de coût de fabrication.

Tous les efforts déployés pour améliorer les performances et réduire les coûts de fabrication avec comme objectif d'atteindre des coûts de production d'énergie compatibles avec les attentes du marché, prennent en compte ces différentes hétérogénéités, sous des angles différents.

Des solutions préconisent ainsi d'exploiter cette hétérogénéité de fonctionnement, en particulier, en utilisant des techniques de répartition hétérogène du catalyseur, c'est à dire de préférence sous les canaux où la diffusion des réactifs est favorisée. Mais ces techniques de distribution hétérogène contrôlée de catalyseur sont coûteuses.

D'autres solutions cherchent au contraire à homogénéiser ce fonctionnement, en utilisant des matériaux qui restent également homogènes, donc a priori plus simples et moins coûteux à produire. Le problème qui se pose alors est comment homogénéiser la contrainte mécanique, dans le but d'homogénéiser le fonctionnement dans les cellules.

Des solutions s'attachent à la structure en relief des parois des plaques qui forme les canaux de transport fluidiques. En d'autres termes ces solutions se concentrent sur la géométrie des dents/canaux.

D'autres s'attachent à rendre plus homogènes, en terme de contrainte mécanique, les matériaux sur lesquels s'exercent ces contraintes, en sorte que la contrainte en compression exercée s'étale de manière sensiblement homogène sur toute la surface de ces composants. Dans cette mouvance, des solutions préconisent que la paroi de plaque sur laquelle sont formés les canaux de transport fluidiques par structuration de la surface en relief, soit réalisée dans un matériau poreux, de type mousse.

D'autres proposent plutôt de rigidifier l'empilement entre l'assemblage AME et les plaques. Par exemple, la demande WO2007/008402 ou le brevet US 6,007,933, ou la demande de brevet US 2007/015042 suggèrent d'ajouter de chaque côté de l'AME, une couche intermédiaire rigide entre une couche de diffusion gazeuse souple et la paroi de plaque, pour favoriser la répartition homogène de la contrainte en compression.

Cette couche intermédiaire doit être conductrice, pour permettre les chemins de conduction électrique entre la couche de diffusion gazeuse et la plaque collecteur de courant, et ne doit pas gêner les fonctions de transport de gaz et d'écoulement d'eau. Le brevet US 6,007,933, enseigne à cet égard que la couche intermédiaire peut être une couche d'un métal déployé, gravé ou tissé, une feuille perforée ou encore un écran.

Ces couches intermédiaires augmentent l'épaisseur des cellules. Cette augmentation d'épaisseur est très gênante, notamment lorsqu'il s'agit d'empilement de cellules en série, pour réaliser une pile de puissance, du fait des fortes attentes du marché en terme de compacité.

### RESUME DE L'INVENTION

L'invention a pour but de proposer une structure de cellule de pile à combustible qui permet d'optimiser le compromis nécessaire entre la réduction des hétérogénéités de contrainte mécanique, dans le but d'obtenir un fonctionnement plus homogène, et l'accommodation autonome vis-à-vis des défauts de planéité/épaisseur/alignement, tout en respectant la contrainte de compacité.

Pour y parvenir, l'invention propose de s'écarter des structures complètement symétriques de l'état de l'art, dans lesquelles on retrouve des couches et un empilement de ces couches identiques de part et d'autre de la membrane, pour proposer une cellule dans laquelle une couche de diffusion gazeuse est plus rigide sur un côté de la membrane que sur l'autre, dans un rapport d'au moins cent environ.

L'invention concerne ainsi une cellule pour pile à combustible, comprenant :
- un assemblage membrane/électrodes comprenant une première électrode et une deuxième électrode séparée par une membrane,
- une couche de diffusion gazeuse empilée sur chaque face de l'assemblage, entre une électrode de l'assemblage et une plaque collecteur de courant,
caractérisée en ce que les couches de diffusion gazeuses empilées de chaque côté de l'assemblage n'ont pas la même rigidité, l'une des couches de diffusion gazeuse ayant un module de Young, relativement à une contrainte appliquée suivant l'épaisseur, supérieur au module de Young de l'autre couche, dans un rapport de l'ordre d'au moins 100.

Les couches de diffusion gazeuse étant des couches poreuses à base de fibre de carbones, la rigidité est ajustée de manière simple par la quantité de liant, de la résine par exemple pour des couches à base de fibres de carbone.

On peut ainsi facilement appliquer l'invention aux cellules de pile déjà bien connues et caractérisées, en adaptant simplement la quantité de liant contenue dans l'une des couches de diffusion gazeuse pour obtenir la rigidité voulue.

De préférence, c'est la couche de diffusion gazeuse côté cathode qui est choisie la plus rigide, ce qui lui confère une fonction d'homogénéisation des contraintes mécaniques. La couche de diffusion gazeuse côté anode, plus souple, permet d'assurer la fonction d'accommodation de l'assemblage aux défauts de planéité/ épaisseur/alignement dans l'empilement de cellules de la pile.

La cellule ainsi constituée a un composant, la couche de diffusion gazeuse, qui d'un côté assure la fonction d'homogénéisation des effets de la contrainte en pression, ce qui a pour effet technique d'homogénéiser le fonctionnement de la cellule, et qui de l'autre côté assure la fonction d'accommodation autonome aux défauts de planéité/épaisseur/alignement.

Avantageusement, on a pu mettre en évidence par essais multiples sur des empilements constitués selon l'invention, en faisant varier la rigidité de la couche la plus rigide, que les meilleurs résultats sont obtenus avec une couche de diffusion gazeuse rigide dont le module d'élasticité ou module de Young, considéré suivant l'axe d'empilement correspondant à l'axe suivant lequel la force de compression est exercée, est compris entre quelques milliers et quelques centaines de milliers de mégapascals (MPa). Il est de préférence compris entre quelques milliers et quelques dizaines de milliers de mégapixels et préférentiellement compris entre environ 5700 MPa et environ 58000 MPa. De préférence, la couche de diffusion la moins rigide a un module de Young qui est de l'ordre de 70 méga Pascals.

L'invention s'applique à une pile à combustible formée d'un empilement de cellules comprenant des couches de diffusion gazeuse de rigidités différentes à l'anode et à la cathode selon l'invention.

L'invention peut être mise en oeuvre simplement, et peut s'appliquer avantageusement à des cellules dont les composants sont déjà bien définis et utilisés dans les piles à combustible, en modifiant simplement la rigidité de l'une des couches de diffusion gazeuse.

D'autres caractéristiques et avantages de l'invention apparaîtront à la lecture de la description détaillée qui suit et qui est faite en référence aux dessins annexés dans lesquels :
- la figure 1 représente schématiquement les composants d'une cellule de pile à combustible ;
- la figure 2 est un schéma d'une pile à combustible comprenant un empilement de plusieurs cellules ;
- la figure 3 illustre les différences structurelles induites sur les couches de diffusion gazeuse d'une cellule, du fait de zones géographiques plus compressées (sous les dents de la plaque) que d'autres (sous les canaux) ;
- la figure 4 est une vue en coupe transversale d'un assemblage électrode-membrane, avec une paroi de plaque appliquée en compression sur la couche de diffusion gazeuse, mettant en évidence les transferts électriques, gazeux et d'eau ou vapeur d'eau dans un compartiment catalytique d'une cellule ;
- la figure 5 représente différentes courbes obtenues par simulation, montrant la répartition de contrainte dans une cellule selon l'invention, selon la rigidité de la couche de diffusion gazeuse la plus rigide ; et
- la figure 6 permet d'illustrer les effets sur la répartition de la densité locale de courant en fonction de la densité globale de courant dans une cellule, selon que les couches de diffusion gazeuse de la cellule sont identiques et souples (a), l'une souple l'autre rigide selon l'invention (b), ou identiques mais rigides (c).

### DESCRIPTION DETAILLEE

L'invention consiste à utiliser une couche de diffusion gazeuse plus rigide sur une face de l'assemblage AME que sur l'autre.

Comme déjà exposé ci-avant, dans l'invention, la rigidité s'entend relativement à une contrainte en compression, c'est-à-dire une contrainte qui s'exerce suivant l'axe d'empilement des composants de la cellule, c'est-à-dire suivant l'épaisseur des couches.

La rigidité de la couche est caractérisée par la valeur du module de Young de cette couche. Il s'agit bien entendu du module de Young relativement à la contrainte en compression qui s'exerce. Dans les figures cet axe est l'axe z, les axes x et y indiqués sur les figures étant ceux des plans de surface des couches empilées. Ceci n'est plus précisé dans la suite.

Selon l'invention, la couche la plus rigide a un module de Young au moins environ cent fois supérieur à celui de l'autre couche.

De préférence, la couche la plus rigide est celle côté cathode, car c'est là que là que la densité de courant est la plus forte ainsi que la quantité d'eau qui tend à distendre la couche de diffusion gazeuse sous les canaux (Figure 3). Notamment, une contrainte exercée de manière plus homogène sur toute la surface de cette couche vient l'empêcher de se distendre, et améliore les chemins de conduction électrique sous les canaux.

Dans un exemple de mise en oeuvre de l'invention, en prenant en exemple des couches de diffusion gazeuse à base de fibres de carbones contenues dans un liant, typiquement une résine, on augmente pour une couche, la quantité de liant habituellement utilisée, pour obtenir la rigidité voulue.

Ainsi, en utilisant une couche de diffusion gazeuse rigide d'un côté d'un assemblage AME et une couche de diffusion gazeuse souple de l'autre côté de cet assemblage, tel qu'il vient d'être précisé, on montre que l'on tend à homogénéiser la répartition de la contrainte mécanique en pression et que l'on peut constater une homogénéisation correspondante de son fonctionnement.

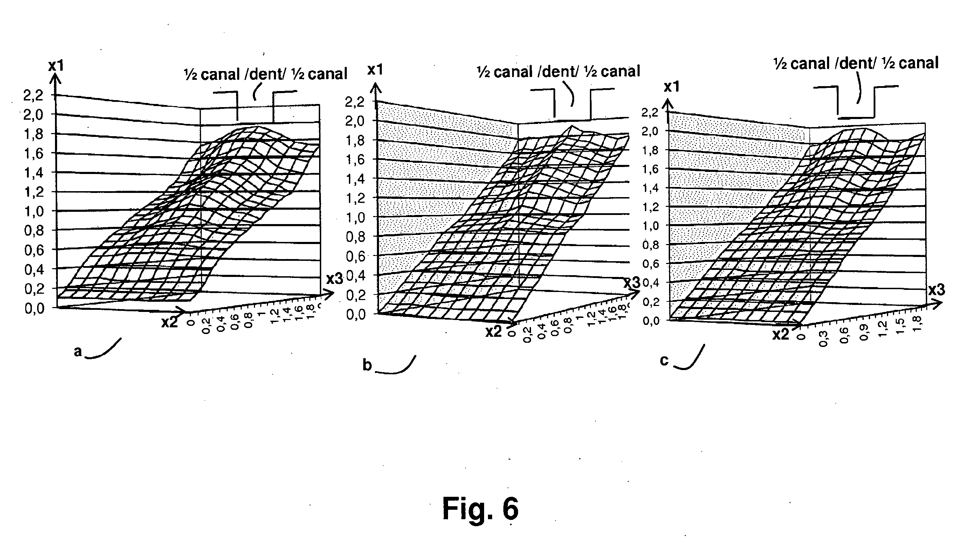

C'est ce qui est illustré sur les figures 5 et 6.

La figure 5 représente des courbes de simulation de la répartition de contrainte pour différents couples de module de Young des couches de diffusion gazeuse d'une cellule, le long d'une série de dents et canaux (suivant l'axe oy, en abscisse). L'axe des ordonnées indique le rapport (sans unité) de la contrainte mesurée sur la couche de diffusion gazeuse sur la force de compression Fc appliquée via les plaques.

La première courbe L1 correspond à une cellule de l'état de l'art avec deux couches de diffusion gazeuse identiques, présentant un module de Young standard pour ces couches, fixé à 69 MPa pour la simulation.

Elle montre une répartition de contrainte tout à fait hétérogène, avec un rapport contrainte sur force de compression nul sous les canaux, et maximal, de l'ordre de -2,50 sous les dents.

La deuxième courbe L2 montre qu'une rigidité accrut d'un rapport 10 dans l'exemple, pour l'une des couches, ne produit pas d'effets notables sur la répartition de la contrainte.

La troisième courbe L3 montre un changement notable, avec une courbe de répartition qui au lieu de la forme crénelée des deux courbes précédentes, correspondant sensiblement au relief dessiné de la plaque, prend une forme sinusoïdale, c'est-à-dire une contrainte qui va croissant et décroissant sinusoïdalement le long de l'axe z, avec des amplitudes crêtes situées sensiblement au milieu des canaux et des dents.

La quatrième courbe L4 montre une amélioration accrue de cette répartition, avec une forme toujours sinusoïdale, mais d'amplitude très atténuée, puisque la courbe L3 s'étendait entre des rapports de contrainte sur force de compression oscillant entre -2,10 environ et 0,00 et la courbe L4 s'étend entre des rapports de contrainte sur force de compression oscillant entre -1,40 environ et -0,90. Elle est obtenue avec une rigidité 1000 fois supérieure à celle de l'autre couche.

La figure 6 met en évidence les effets d'une répartition plus homogène de la contrainte par rigidification d'une ou des deux couches de diffusion gazeuse. Elle représente la répartition de densité locale de courant le long d'un motif demi-canal/dent/demi-canal (suivant l'axe oy, en abscisse), en fonction de la densité globale de courant, que l'on fait varier aux bornes d'une cellule.

Ces courbes sont obtenues de manière connue en plaçant des microfils conducteurs sous les dents et les canaux d'une plaque, entre la plaque et une couche de diffusion gazeuse. Les plaques de la cellule sont reliées à une charge électrique variable, typiquement un galvanostat, qui permet de balayer une large plage de courant, et donc de densité de courant globale (égale à la valeur du courant rapportée à la surface du coeur de pile). On mesure une différence de potentiel sur chacun des fils, et à partir d'un modèle électrique de la pile, on remonte à la densité locale de courants. Une technique bien connue passe par une utilisation de l'équation de Laplace pour injecter ensuite les valeurs obtenues dans un modèle de simulation électrique comme expliqué par exemple dans la publication suivante : de Stefan A. Freunberger et al, "Measuring the current distribution in PEFCs with sub-millimeter resolution" Journal of Electrochimical Society, 153 (11) A2158-A2165 (2006*)*.

La figure 6 montre la cartographie obtenue selon que la cellule a deux couches de diffusion gazeuse identiques et souples, une couche de diffusion rigide et l'autre souple, selon l'invention, ou encore deux couches rigides, pour une cellule à structure de plaques identique par ailleurs, à savoir, avec des largeurs de dents de 0,8 mm et de canaux de 1,4 mm, et une densité de courant de 1,5 A/mm². L'axe x1 est l'axe de la densité locale de courant en ampère par centimètre carré, l'axe x2 est l'axe donnant la position de la succession des dents et canaux suivant l'axe y de la géométrie des cellules, en millimètre. Enfin, l'axe x3 donne la densité globale de courant, en ampère par centimètre carré.

La carte "a" sur la figure, qui correspond à une cellule classique à couches de diffusion gazeuse "naturellement" souples, montre que l'écart de la densité locale de courant entre une dent et un canal augmente avec l'augmentation de la densité de courant global.

En utilisant une couche de diffusion gazeuse rigide, comme spécifié dans l'invention, dans l'empilement de la cellule, on peut voir que cet écart diminue fortement pour des densités de courant globales supérieures à 0,5 Ampère par centimètre carré, correspondant à ce qui est demandé pour les applications des piles à combustible.

De manière plus détaillée, pour un assemblage selon l'invention avec une couche de diffusion gazeuse souple et l'autre rigide, l'hétérogénéité de fonctionnement est beaucoup plus faible, et ne commence qu'à partir de 1 ampère par centimètre carré. La solution de l'invention offre donc une plage de fonctionnement homogène ou sensiblement homogène pour la gamme de densité globale de courant recherchée pour les applications des piles.

En outre, l'inhomogénéité de densité de courant local est localisée sous la dent, sur une largeur de 0,4 mm pour une cellule à couches de diffusion gazeuse l'une souple l'autre rigide suivant l'invention (courbe b), contre 1 mm dans le cas où les deux seraient rigides (courbe c).

L'homogénéité de densité de courant local favorise une répartition homogène de l'eau produite. Dans le cas contraire, il y a accumulation d'eau sous la dent et le transfert de gaz devient impossible pour des densités de courant plus élevées, conduisant à un arrêt de la pile.

Ainsi l'invention décrite et revendiquée permet de réduire les inhomogénéités de fonctionnement liées à l'effet mécanique dent/canal des distributeurs de gaz, tout en permettant un accommodement autonome d'un empilement de composants en pile de puissance, pour palier les inhomogénéités d'alignement, planéité et épaisseur des composants.

Elle s'applique facilement à des composants de pile qui ont déjà fait leur preuve, elle ne génère pas de sur-épaisseurs, et ne dégrade ni les fonctions thermiques ni les fonctions électriques des couches de diffusion gazeuse.

## Revendications

1. Cellule (Cᵢ) pour pile à combustible, comprenant :
- un assemblage membrane/électrodes (AME) comprenant une première électrode (Aᵢ) et une deuxième électrode (Bᵢ) séparée par une membrane (Mᵢ),
- une couche de diffusion gazeuse empilée sur chaque face de l'assemblage, entre une électrode de l'assemblage et une plaque collecteur de courant (Pᵢ),
**caractérisée en ce que** les couches de diffusion gazeuses (GDL_{Ai}, GDL_{Bi}) empilées de chaque côté de l'assemblage n'ont pas la même rigidité, l'une des couches de diffusion gazeuse ayant un module de Young relativement à une contrainte appliquée suivant l'épaisseur, supérieur au module de Young de l'autre couche, dans un rapport de l'ordre d'au moins 100.

2. Cellule selon la revendication 1, **caractérisée en ce que** la couche de diffusion gazeuse la plus rigide est celle empilée sur l'électrode de l'assemblage qui forme une cathode.

3. Cellule selon la revendication 1 ou 2, **caractérisée en ce que** la couche de diffusion la plus rigide a un module de Young au moins supérieur à quelques milliers de mégapascals.

4. Cellule selon la revendication 1 ou 2, **caractérisée en ce que** la couche de diffusion la plus rigide a un module de Young compris entre quelques milliers de mégapascals, et quelques dizaines de milliers de mégapascals, et préférentiellement compris entre 5700 mégapascals environ et 58000 mégapascals environ.

5. Cellule selon l'une quelconque des revendications précédentes, **caractérisée en ce que** la couche de diffusion la moins rigide a un module de Young qui est de l'ordre de 70 méga Pascals.

6. Pile à combustible comprenant un empilement d'une ou plusieurs cellules suivant l'une quelconque des revendications 1 à 5.

## Patentansprüche

1. Zelle (Cᵢ) für eine Brennstoffzelle, die Folgendes umfasst:
- eine Membran/Elektroden-Baugruppe (AME), die eine erste Elektrode (Aᵢ) und eine zweite Elektrode (Bᵢ) umfasst, die durch eine Membran (Mᵢ) getrennt sind;
- eine Gasdiffusionsschicht, die auf jeder Fläche der Baugruppe zwischen einer Elektrode der Baugruppe und einer Stromkollektorplatte (Pᵢ) gestapelt ist,
**dadurch gekennzeichnet, dass** die auf jeder Seite der Baugruppe gestapelten Gasdiffusionsschichten (GDL_{Ai}, GDL_{Bi}) nicht dieselbe Steifigkeit haben, wobei eine der Gasdiffusionsschichten ein Young-Modul relativ zu einer in der Dicke aufgebrachten Belastung hat, das größer ist als das Young-Modul der anderen Schicht, mit einem ungefähren Verhältnis von wenigstens 100.

2. Zelle nach Anspruch 1, **dadurch gekennzeichnet, dass** die steifste Gasdiffusionsschicht die Schicht ist, die auf die Elektrode der Baugruppe gestapelt ist, die eine Kathode bildet.

3. Zelle nach Anspruch 1 oder 2, **dadurch gekennzeichnet, dass** die steifste Diffusionsschicht ein Young-Modul hat, das wenigstens größer als mehrere tausend Megapascal ist.

4. Zelle nach Anspruch 1 oder 2, **dadurch gekennzeichnet, dass** die steifste Diffusionsschicht ein Young-Modul hat, das zwischen mehreren tausend Megapascal und mehreren zehntausend Megapascal und vorzugsweise zwischen etwa 5700 Megapascal und etwa 58.000 Megapascal liegt.

5. Zelle nach einem der vorherigen Ansprüche, **dadurch gekennzeichnet, dass** die am wenigsten steife Diffusionsschicht ein Young-Modul hat, das etwa 70 Megapascal beträgt.

6. Brennstoffzelle, die einen Stapel von einer oder mehreren Zellen nach einem der Ansprüche 1 bis 5 umfasst.

## Claims

1. A cell (Cᵢ) for a fuel cell, comprising:
- a membrane/electrode assembly (AME) comprising a first electrode (Aᵢ) and a second electrode (Bᵢ) separated by a membrane (Mᵢ);
- a gas diffusion layer stacked on each face of said assembly, between an electrode of said assembly and a current collector plate (Pᵢ),
**characterised in that** the gas diffusion layers (GDL_{Ai}, GDL_{Bi}) stacked on each side of said assembly do not have the same stiffness, with one of the gas diffusion layers having a Young's modulus, relative to an applied stress in the thickness, that is greater than the Young's modulus of the other layer, with an approximate ratio of at least 100.

2. The cell according to claim 1, **characterised in that** the stiffest gas diffusion layer is the layer that is stacked on the electrode of said assembly that forms a cathode.

3. The cell according to claim 1 or 2, **characterised in that** the stiffest diffusion layer has a Young's modulus that is at least greater than several thousand megapascals.

4. The cell according to claim 1 or 2, **characterised in that** the stiffest diffusion layer has a Young's modulus that is between several thousand megapascals and several tens of thousands of megapascals, and preferably between approximately 5,700 megapascals and approximately 58,000 megapascals.

5. The cell according to any one of the preceding claims, **characterised in that** the least stiff diffusion layer has a Young's modulus that is approximately 70 megapascals.

6. A fuel cell comprising a stack of one or more cells according to any one of claims 1 to 5.
